# EUROPEAN PATENT SPECIFICATION

(11) **EP 0 888 593 B1**
(45) Date of publication and mention of the grant of the patent: **12.02.2003**
(21) Application number: 97914291.6
(22) Date of filing: 20.03.1997
(51) Int. Cl.: G07C 5/00, B67D 5/33

(54) **PROVIDING SERVICE TO A VEHICLE**
SERVICEABGABE AN EIN FAHRZEUG
PRESTATION DE SERVICE POUR UN VEHICULE

(30) Priority: 21.03.1996 EP 96200785
(43) Date of publication of application: 07.01.1999
(73) Proprietor: SHELL INTERNATIONALE RESEARCH MAATSCHAPPIJ B.V., 2596 HR Den Haag (NL)
(72) Inventor: BOS, Emko, Wilhelm, Harmannus, Maria, NL-1031 CM Amsterdam (NL); DELEVAL, Xavier, Frederic, Nicolas, Marie, NL-3032 AC Rotterdam (NL); DWARS, Sicco, Chester, Cheshire CH1 3SH (GB); VAN DER STEEN, Johan, NL-1031 CM Amsterdam (NL)
(86) International application number: EP9701457
(87) International publication number: WO97035284

(56) References cited:
- EP-A- 0 476 858
- EP-A- 0 618 557
- WO-A-90/12366
- FR-A- 2 600 318
- GB-A- 2 224 418
- US-A- 4 263 945
- US-A- 5 156 198
- US-A- 5 343 906

## Description

The present invention relates to a system for providing service to a vehicle positioned at a service site and billing a person or company for the service provided. The service provided can be, for example, filling the fuel tank of the vehicle or washing the vehicle.

European patent No. 461 888 discloses automatically identifying a vehicle approaching a service site, providing service to the vehicle at the service site, and billing a person or company for the service provided. The known system relies on determining electronically whether an approaching vehicle is stopping for service and on identifying electronically the approaching vehicle as it enters into a service site. To this end the vehicle is provided with a passive tag which is activated by a signal from a site antenna that is always energized. When the service has been provided the transaction is registered and the costs associated with the service are billed.

In the known system, every approaching vehicle is identified, even when the driver passes through the service site in order to visit a shop or a toilet that is present on the premises. Furthermore, special precautions have to be taken to prevent any other nearby service site from identifying the vehicle after it has been identified by the service site where it stops.

Reference is made to USA patent specification No. 4 263 945. This publication discloses a system for providing service to a vehicle positioned at a service site and billing a person or company for the service provided, wherein the vehicle is provided with a vehicle processing unit which includes a transmitter connected to a vehicle antenna and with means for manually activating the vehicle processing unit, and wherein the service site comprises means for providing service and a site processing unit which includes a receiver connected to a site antenna, which site processing unit includes means for registering the transaction and means for billing the person or company for the service provided.

The system disclosed in this publication does not allow transfer of signals from the service site to the vehicle. It is an object of the present invention to provide not only a two-way communication but also to provide a system which prevent fraud and which reduces the chances of the vehicle tank being filled with the wrong fuel.

To this end the system for providing service to a vehicle positioned at a service site and billing a person or company for the service provided according to the present invention is characterized in that the vehicle processing unit further includes a receiver connected to the vehicle antenna, in that the site processing unit further includes a transmitter connected to the site antenna and in that the system further comprises separate means for continuously and automatically correlating the act of servicing the vehicle with the vehicle.

For the sake of completeness, reference is made to French patent application publication No. 2 600 318. This publication also discloses a system for providing service to a vehicle. In this system disclosed in this publication, the site processing unit is provided with an antenna for transmitting a signal which, on receipt by the vehicle processing unit triggers the vehicle processing unit to provide data on the vehicle which are relevant to the transaction. This publication, thus does not disclose two-way communication. Moreover this publication does not disclose that the system has means for manually activating the vehicle processing unit, nor does this publication discloses that the system includes separate means for automatically correlating the act of servicing the vehicle with the vehicle.

The invention also relates to a method for providing service to a vehicle positioned at a service site and billing a person or company for the service provided, which method comprises the steps of
(a) activating manually the vehicle processing unit which will transmit sufficient data to the site processing unit to allow identifying the vehicle;
(b) allowing service provision to start if the vehicle has been authenticated and authorized;
(c) continuously and automatically correlating the act of servicing the vehicle with the vehicle, said correlation being done separately from the information exchange needed to authenticate the vehicle;
(d) stopping service provision and closing the transaction;
(e) registering the transaction, and billing the person or company for the service provided.

The invention will now be described by way of example in more detail with reference to the accompanying drawings, wherein
Figure 1 shows a first embodiment of the invention;
Figure 2 shows an alternative embodiment of the invention; and
Figure 3 shows a further alternative embodiment of the invention.

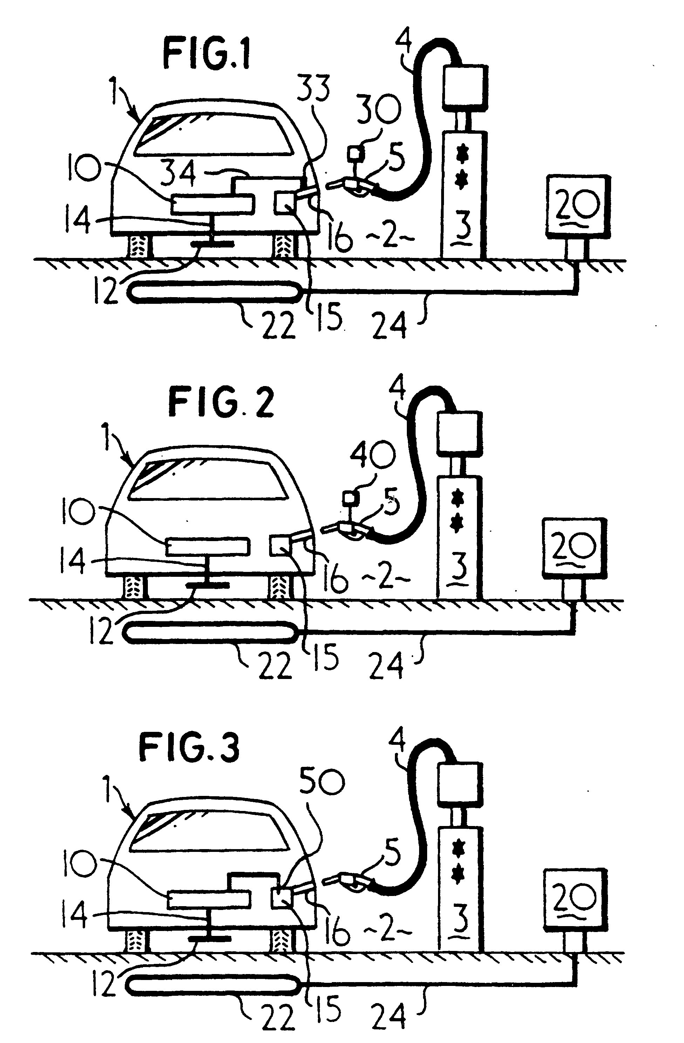

Reference is made to Figure 1 showing a first embodiment of the invention. A vehicle 1 is parked at a service site 2 provided with means for providing service. In this case, the means for providing service is a fuel pump 3 which is provided with a supply hose 4 and a fill pistol 5.

The vehicle 1 is provided with a vehicle processing unit 10, a vehicle antenna 12, and with means (not shown) for manually activating the vehicle processing unit 10. The antenna 12 is connected by means of an electric conduit 14 to a receiver-transmitter (not shown) which is part of the vehicle processing unit 10. The means for manually activating the vehicle processing unit 10 is for example the vehicle's contact switch, so designed that when the contact is turned off for a pre-determined period, for example 10 seconds, the vehicle processing unit 10 is activated.

The vehicle is further provided with a fuel tank 15 having an inlet 16.

The service site 2 comprising the fuel pump 3, further comprises a site processing unit 20 and a site antenna 22. The site antenna 22 is connected to a receiver-transmitter (not shown) which is part of the site processing unit 20 by means of an electric conduit 24. In this case the site antenna 22 is located sub-surface.

The site processing unit is provided with data storage means (not shown) which contain data required to identify and to authenticate the vehicle. The site processing unit also includes means (not shown) for authorizing the vehicle 1, means (not shown) for registering the transaction and means (not shown) for billing the person or company for the service provided.

The system further comprises separate means for automatically correlating the act of servicing the vehicle 1 with the vehicle 1. In this case, the fill pistol 5 is provided with a passive tag 30 and the vehicle 1 is provided with a secondary antenna 33 located on the vehicle 1. The secondary antenna is connected to the vehicle processing unit 10 by means of electric conduit 34. Suitably the secondary antenna 33 is located at or near the inlet 16 of the fuel tank 15 of the vehicle 1. The vehicle 1 is furthermore provided with means (not shown) for energizing the passive tag 30, which means are activated by the vehicle processing unit 10.

During normal operation, the approaching vehicle 1 is not detected. Only when the vehicle 1 has stopped at the service site 2 and when the driver has activated manually the vehicle processing unit 10, a two-way exchange of information between the vehicle processing unit 10 and the site processing unit 20 starts. The two-way exchange of information is done via the respective receivers-transmitters connected to the antennae 12 and 22.

The information from the vehicle processing unit 10 allows the site processing unit 20 to identify the vehicle i and subsequently to authenticate it by comparing the data provided by the vehicle processing unit 10 with the relevant data available to the site processing unit 20. When the vehicle 1 has been authenticated, it is authorized.

When the vehicle 1 has been authorized, providing the service can start. In this case the fuel pump 3 is released by the site processing unit 20 for filling the fuel tank 15 of the vehicle 1.

When inserting the fill pistol 5 into the inlet 16 of the fuel tank 15 of the vehicle 1, the means for energizing the passive tag provide energy to activate the passive tag 30 on the filling pistol 5. The signal provided by the activated passive tag 30 is received by the secondary antenna 33 on the vehicle and is passed to the vehicle processing unit 10. From there the information is relayed to the site processing unit 20 via the respective receiver-transmitters and antennae 12 and 22. This information enables the site processing unit 20 to continuously and automatically correlate the act of servicing the vehicle 1 with the vehicle itself. This correlation is done separately from the information exchange needed to authenticate the vehicle.

This provision enables prevention of fraud, and it also reduces the chances of filling the tank with the wrong fuel (for example diesel fuel in the tank of a vehicle provided with an Otto engine).

It is also possible that the site processing unit 20 interrupts supplying fuel when the distance between the passive tag 30 and the secondary antenna 33 exceeds a predetermined distance. In this way spilling of fuel can be prevented, and also fraud can be prevented.

Reference is made to Figure 2 showing an alternative embodiment of the invention. In this alternative embodiment the vehicle 1 is not provided with a secondary antenna. To allow the correlation, the separate means for automatically correlating the act of servicing the vehicle 1 with the vehicle itself comprise an active tag 40 located at the means for providing service, which is in this case the filling pistol 5. The active tag 40 is activated during the provision of the service, filling the fuel tank 15 of the vehicle 1. The unique signal emitted by the active tag 40 is received by the site antenna 22 and passed on to the site processing unit 20, which can so correlate the act of servicing the vehicle 1 with the vehicle itself, separately from authenticating the vehicle.

The above described embodiments can as well be used for a car wash unit in stead of a fuel pump.

Reference is made to Figure 3, showing an embodiment of the invention which is only applicable for a fuel pump. In this embodiment the separate means for automatically correlating the act of servicing the vehicle with the vehicle comprise a fuel tank level gauge 50 which is connected to the vehicle processing unit 10. During filling the liquid level in the fuel tank 15 raises and the signal of the fuel tank level gauge 50 is passed on to the site processing unit 20 via the vehicle processing unit 10. In this way the site processing unit can correlate the act of servicing the vehicle 1 with the vehicle itself, separately from authenticating the vehicle.

The vehicle can be provided with a credit card reading-writing unit (not shown) which allows billing the costs for the service provided by means of the normal routine of paying by means of a credit card. In place of the credit card, a chip card can be used or a pre-charged electronic purse.

The data transmitted by the vehicle processing unit may include odometer readings. It can also include vehicle status information.

The site processing unit 20 contains information on products and associated costs and on services and associated costs. It can further contain customer details, traffic- and weather information, and routing information. This information can be passed on to the vehicle processing unit and the costs will be charged. Furthermore the site processing unit may contain a facility for electronic mail which the driver can use through his vehicle processing unit.

If required, the two-way communication between the vehicle processing unit and the site processing unit may be in the form of coded or encrypted communication.

The communication can be done by means of inductive loop communication or by means of radio communication.

## Claims

1. System for providing service to a vehicle (1) positioned at a service site (2) and billing a person or company for the service provided, wherein the vehicle (1) is provided with a vehicle processing unit (10) which includes a transmitter connected to a vehicle antenna (12) and with'means for manually activating the vehicle processing unit (10), and wherein the service site (2) comprises means for providing service and a site processing unit (20) which includes a receiver connected to a site antenna (22), which site processing unit (20) includes means for registering the transaction and means for billing the person or company for the service provided, **characterized in that** the vehicle processing unit (1) further includes a receiver connected to the vehicle antenna (12), **in that** the site processing unit (20) further includes a transmitter connected to the site antenna (22) and **in that** the system further comprises separate means for continuously and automatically correlating the act of servicing the vehicle with the vehicle (1).

2. System according to claim 1, wherein the separate means for automatically correlating the act of servicing the vehicle with the vehicle (1) comprise a passive tag (30) located at the means for providing service, and on the vehicle means for energizing the passive tag (30) and a secondary antenna (33) connected to the vehicle processing unit (10).

3. System according to claim 1, wherein the separate means for automatically correlating the act of servicing the vehicle with the vehicle (1) comprise an active tag (40) located at the means for providing service (5), which tag (40) is activated during the provision of the service.

4. System according to claim 1, wherein the means for providing service is a fuel pump (3), and wherein the separate means for automatically correlating the act of servicing the vehicle with the vehicle (1) comprise a fuel tank level gauge (50) connected to the vehicle processing unit (10).

5. Method for providing service to a vehicle (1) including a vehicle processing unit (10) positioned at a service site (2) including a site processing unit (20) and billing a person or company for the service provided, comprising the steps of
(a) activating manually the vehicle processing unit (10) which will transmit sufficient data to the site processing unit (20) to allow identifying the vehicle (1);
(b) allowing service provision to start if the vehicle (1) has been authenticated and authorized;
(c) continuously and automatically correlating the act of servicing the vehicle with the vehicle (1), said correlation being done separately from the information exchange needed to authenticate the vehicle
(d) stopping service provision and closing the transaction;
(e) registering the transaction; and billing the person or company for the service provided.

## Patentansprüche

1. System zur Vornahme eines Service an einem Fahrzeug (1), das an einer Servicestelle (2) angeordnet ist, und Fakturieren einer Person oder Firma für das vorgenommene Service, wobei das Fahrzeug (1) mit einem Fahrzeugprozessor (10) ausgestattet ist, der einen Sender aufweist, der mit einer Fahrzeugantenne (12) verbunden ist, und mit Mitteln zum manuellen Aktivieren des Fahrzeugprozessors (10), und wobei die Servicestelle (2) Mittel zur Vornahme des Service und einen Servicestellenprozessor (20) aufweist, der einen Empfänger umfaßt, der mit der Servicestellenantenne (22) verbunden ist, wobei der Servicestellenprozessor (20) Mittel zum Registrieren der Transaktion, und Mittel zum Fakturieren der Person oder Firma für das vorgenommene Service aufweist, **dadurch gekennzeichnet, daß** der Fahrzeugprozessor (1) ferner einen Empfänger hat, der mit der Fahrzeugantenne (12) verbunden ist, daß der Servicestellenprozessor (20) ferner einen Sender aufweist, der mit der Servicestellenantenne (22) verbunden ist, und daß das System ferner getrennte Mittel zum kontinuierlichen und automatischen Korrelieren der Vornahme des Service an dem Fahrzeug mit dem Fahrzeug (1) aufweist.

2. System nach Anspruch 1, bei welchem die getrennten Mittel zum automatischen Korrelieren der Vornahme des Service an dem Fahrzeug mit dem Fahrzeug (1) eine passive Anzeige (30) aufweisen, die an den Mitteln zur Vornahme des Service vorgesehen ist, und auf dem Fahrzeug Mittel zum Beaufschlagen der passiven Anzeige (30) mit Energie und eine Sekundärantenne (33) vorgesehen sind, die mit dem Fahrzeugprozessor (10) verbunden ist.

3. System nach Anspruch 1, bei welchem die separaten Mittel zum automatischen Korrelieren der Vornahme des Service an dem Fahrzeug mit dem Fahrzeug (1) eine aktive Anzeige (40) aufweisen, die an den Mitteln zur Vornahme des Service (5) vorgesehen ist, wobei die Anzeige (40) während der Vornahme des Service aktiviert wird.

4. System nach Anspruch 1, bei welchem die Mittel zur Vornahme des Service eine Treibstoffpumpe (3) sind, und wobei die gesonderten Mittel zum automatischen Korrelieren der Vornahme des Service an dem Fahrzeug mit dem Fahrzeug (1) einen Treibstofftank-Füllstandsmesser (50) aufweisen, der mit dem Fahrzeugprozessor (10) verbunden ist.

5. Verfahren zur Vornahme eines Service an einem Fahrzeug (1), das einen Fahrzeugprozessor (10) aufweist, der an der Servicestelle (2) angeordnet ist, die einen Servicestellenprozessor (20) aufweist, und des Fakturierens einer Person oder Firma für das vorgenommene Service, mit den Schritten:
(a) Aktivieren des Fahrzeugprozessors (10) von Hand aus, der ausreichend Daten an den Servicestellenprozessor (20) überträgt, um ein Identifizieren des Fahrzeuges (1) zu gestatten;
(b) Zulassen des Beginns der Servicevornahme, wenn das Fahrzeug (1) berechtigt und autorisiert ist;
(c) kontinuierliches und automatisches Korrelieren der Vornahme des Service an dem Fahrzeug mit dem Fahrzeug (1), wobei das Korrelieren getrennt vom Informationsaustausch erfolgt, der zum Berechtigen des Fahrzeuges notwendig ist;
(d) Beenden des Service und Abschließen der Transaktion;
(e) Registrieren der Transaktion, und Fakturieren der Person oder Firma für das vorgenommene Service.

## Revendications

1. Système pour fournir un service à un véhicule (1) situé sur un site de service (2) et pour facturer à une personne ou une société le service fourni, dans lequel le véhicule (1) est doté d'une unité de traitement (10) sur véhicule qui comprend un émetteur relié à une antenne de véhicule (12) et de moyens pour activer manuellement l'unité de traitement (10) sur véhicule, et dans lequel le site de service (2) comprend des moyens pour fournir des services et une unité de traitement (20) sur site qui comprend un récepteur relié à une antenne de site (22), laquelle unité de traitement (20) sur site comprend des moyens pour enregistrer la transaction et des moyens pour facturer à la personne ou à la société le service fourni, **caractérisé en ce que** l'unité de traitement (1) sur véhicule comprend en outre un récepteur relié à l'antenne de véhicule (12), **en ce que** l'unité de traitement (20) comprend en outre un émetteur relié à l'antenne de site (22) et **en ce que** le système comprend en outre des moyens séparés pour corréler en continu et automatiquement la fourniture de service au véhicule avec le véhicule (1).

2. Système selon la revendication 1, dans lequel le moyen séparé pour corréler automatiquement la fourniture de service au véhicule avec le véhicule (1) comprend un identificateur passif (30) situé sur les moyens de fourniture de service, et sur le véhicule, des moyens pour activer l'identificateur passif (30), et une antenne secondaire (33) reliée à l'unité de traitement (10) sur véhicule.

3. Système selon la revendication 1, dans lequel le moyen séparé pour corréler automatiquement la fourniture de service au véhicule avec le véhicule (1) comprend un identificateur actif (40) situé sur les moyens de fourniture de service (5), lequel identificateur (40) est activé pendant la fourniture du service.

4. Système selon la revendication 1, dans lequel les moyens pour fournir un service sont constitués d'une pompe à carburant (3), les moyens séparés pour corréler automatiquement la fourniture du service au véhicule avec le véhicule (1) comprenant une sonde (50) de niveau dans le réservoir à carburant reliée à l'unité de traitement (10) sur véhicule.

5. Procédé pour fournir un service à un véhicule (1) qui contient une unité de traitement (10) d'un véhicule situé sur un site de service (2) qui contient une unité de traitement (20) sur site et pour facturer à une personne ou à une société le service fourni, comprenant les étapes consistant à:
(a) activer manuellement l'unité de traitement (10) sur véhicule qui transmettra à l'unité de traitement (20) sur site des données suffisantes pour permettre l'identification du véhicule (1);
(b) permettre à la fourniture de service de commencer si le véhicule (1) a été authentifié et autorisé;
(c) corréler en continu et automatiquement la fourniture de service au véhicule avec le véhicule (1), ladite corrélation étant réalisée séparément de l'échange d'informations nécessaires pour authentifier le véhicule;
(d) arrêter la fourniture du service et clôturer la transaction; et
(e) enregistrer la transaction et facturer à la personne ou à la société le service fourni.
